# DEMANDE DE BREVET EUROPEEN

(11) **EP 1 070 891 A1**
(43) Date de publication de la demande: **24.01.2001**
(21) Numéro de dépôt: 00402013.7
(22) Date de dépôt: 12.07.2000
(51) Int. Cl.: F16K 1/226

(54) **Dispositif à papillon(s) de mise en communication et d'isolement de conduits de fluide**

(30) Priorité: 19.07.1999 FR 9909350
(71) Demandeur: VERNET S.A., 91291 Arpajon Cédex (FR)
(72) Inventeur: Mabboux, Lionel Jean, 91700 Sainte Genevieve des Bois (FR); Le Clanche, Gérard Jean André, 91210 Draveil (FR)
(74) Mandataire: Farges, Roger

(57) **Abrégé**

Le dispositif comporte deux éléments (1A, 1B) formant boîtier où s'étend au moins un canal (10) contenant un papillon (2) fixé à une broche (3) pivotante, présentant des surfaces de joint accolées par un plan de joint (11) transversal au canal et passant par l'axe de la broche. Dans les surfaces de joint, au pourtour du canal, sont logées des garnitures d'étanchéité (4A, 4B) accolées pour former un anneau que la broche traverse de manière étanche ; les garnitures (4A, 4B) présentent des dimensions intérieures différentes pour définir deux faces (43) s'étendant transversalement au pourtour du canal formant sièges pour le papillon (2) orientées dans des directions opposées. Le dispositif peut comporter plusieurs canaux munis d'un papillon. Il peut également comporter un moyen moteur pour entraîner la broche en rotation.

Le dispositif peut être utilisé dans les circuits de refroidissement des moteurs de véhicules.

## Description

L'invention concerne les vannes-papillon, et a plus particulièrement pour but de créer un dispositif à papillon(s) de mise en communication et d'isolement de conduits, ayant une bonne étanchéité malgré un agencement simple permettant une fabrication aisée, dans une version susceptible d'être motorisée et de comporter plusieurs voies.

De manière générale, l'utilisation de vannes-papillon, qui introduisent seulement une faible perte de charge et sont des systèmes équilibrés, présenterait un intérêt dans les circuits de refroidissement des véhicules automobiles, dans lesquels des pompes de relativement faible puissance (100 watts à 200 watts) seraient utilisées ; en outre, ces vannes pourraient aisément être actionnées par des moteurs tels que des moteurs pas-à-pas. Cependant, une telle application dans le domaine thermostatique exige une excellente étanchéité, ce qui rend à l'heure actuelle difficile l'utilisation de telles vannes.

L'invention a pour but de remédier à cet inconvénient et concerne à cette fin un dispositif de mise en communication et d'isolement de conduits de fluide comportant un boîtier dans lequel s'étend au moins un canal pour le fluide débouchant du boîtier par des accès adaptés pour être raccordés aux conduits et contenant au moins un papillon fixé à une broche mobile en pivotement autour de son axe longitudinal, caractérisé en ce que le boîtier comporte deux éléments de boîtier présentant deux surfaces de joint respectives accolées par au moins un plan de joint traversant transversalement le canal et passant par l'axe de la broche, et les surfaces de joint comportent chacune une cavité élargissant le canal sur tout son pourtour et dans laquelle est logée une garniture d'étanchéité, les deux garnitures étant en vis-à-vis autour du canal et accolées par le plan de joint pour constituer un anneau d'étanchéité, lequel est percé de deux trous alignés où deux régions de la broche disposées de part et d'autre du papillon sont montées pivotantes en contact étanche sur tout leur pourtour, et chaque garniture présente un premier tronçon de paroi interne s'étendant entre les trous d'un côté du canal, dimensionné pour permettre par ce côté un pivotement du papillon d'une position de pleine ouverture où il s'étend approximativement longitudinalement dans le canal à une position approximativement transversale de fermeture, et un deuxième tronçon de paroi interne s'étendant entre les trous de l'autre côté du canal et dimensionné pour interdire par ce côté l'accès à la position de fermeture, le premier tronçon de paroi interne de chaque garniture étant adjacent au deuxième tronçon de l'autre, chaque deuxième tronçon étant sur au moins une partie de la longueur de la garniture plus en saillie dans le canal que le premier tronçon qui lui est adjacent, pour définir une face s'étendant transversalement au pourtour du canal, d'un trou à l'autre de l'anneau d'étanchéité, formant siège pour le papillon, les faces formant sièges des deux garnitures étant orientées dans des directions opposées.

Grâce à cette conception, les deux garnitures assurent à la fois l'étanchéité entre les deux régions du canal d'écoulement de fluide respectivement de part et d'autre du papillon en position de fermeture, l'étanchéité entre le canal et l'extérieur, et l'étanchéité du passage de la broche portant le papillon.

Le dispositif peut en outre posséder une ou plusieurs des caractéristiques suivantes :
- la broche s'étend, de part et d'autre du papillon, dans des logements prévus pour elle dans les deux éléments de boîtier, et la surface de joint d'au moins l'un des deux éléments est creusée de rainures s'y étendant, respectivement de part et d'autre du canal, en forme de boucles entourant à distance les logements et débouchant dans la cavité pour la garniture d'étanchéité de cet élément, et dans ces rainures, sont logées des boucles d'étanchéité d'un seul tenant avec la garniture d'étanchéité,
- il comporte au moins deux canaux s'étendant dans le boîtier, dans chacun desquels est disposé un papillon,
- les canaux débouchent à l'extérieur du boîtier par des accès dont l'un est commun à ces canaux, qui débouchent l'un dans l'autre du côté de cet accès,
- les papillons sont fixés à la même broche, et ces papillons s'étendent dans des plans perpendiculaires afin que l'un soit en position de pleine ouverture quand l'autre est en position de fermeture,
- autour de chaque canal, les surfaces de joint des deux éléments de boîtier comportent chacune une cavité élargissant le canal sur tout son pourtour et dans laquelle est logée une garniture d'étanchéité, les deux garnitures autour de chaque canal étant accolées par le plan de joint pour constituer un anneau d'étanchéité percé de trous alignés où deux régions de la broche sont montées pivotantes en contact étanche sur tout leur pourtour, les deux garnitures comportant chacune une face formant siège pour le papillon, les faces formant sièges des deux garnitures étant orientées dans des directions opposées,
- la même broche porte les deux papillons et s'étend dans le boîtier de part et d'autre des deux papillons et entre ceux-ci dans des logements où elle est portée par des bagues, et la surface de joint d'au moins l'un des deux éléments de boîtier est creusée de rainures s'étendant entre les cavités entourant les canaux et en boucles respectivement de part et d'autre des canaux à distance autour des logements, et dans ces rainures, sont logées des branches de liaison des garnitures d'étanchéité et des boucles d'étanchéité d'un seul tenant avec les garnitures,
- il comporte un moteur fixé à l'extérieur d'un élément de boîtier, la broche se prolonge d'un côté d'un canal, en saillie à l'intérieur d'une chambre du boîtier dans laquelle pénètre également un arbre de sortie du moteur, et l'arbre de sortie est relié à la broche par des moyens de liaison afin que la rotation de l'arbre entraîne celle de la broche,
- il comporte un moyen moteur constitué par un élément thermostatique à dilatation de cire, et la broche se prolonge d'un côté d'un canal, en saillie à l'intérieur d'une chambre du boîtier dans laquelle pénètre également une tige mobile associée à l'élément thermostatique, et la tige mobile est reliée à la broche par des moyens de liaison afin qu'une translation de la tige mobile entraîne la rotation de la broche,
- l'une des rainures entoure à distance un ensemble formé par la chambre et un logement pour la broche, et dans cette rainure, est logée une boucle d'étanchéité d'un seul tenant avec une garniture d'étanchéité.

D'autres caractéristiques et avantages de l'invention ressortiront de la description qui va suivre de formes de réalisation de l'invention, donnée à titre d'exemple non limitatif et illustrée par les dessins joints dans lesquels :
- la figure 1 est une coupe schématique d'une forme de réalisation d'un dispositif, du type vanne quart de tour, selon l'invention,
- la figure 2 est une coupe schématique selon la ligne II-II de la figure 1, de la forme de réalisation de cette figure avec une commande par moteur,
- la figure 3 est une coupe schématique vue de droite d'une forme de réalisation de la figure 2, selon la ligne III-III de cette figure,
- la figure 4 est une coupe schématique vue de gauche de la forme de réalisation de la figure 2, selon la ligne III-III de cette figure,
- la figure 5 est une vue extérieure de la garniture d'étanchéité visible sur la figure 3,
- la figure 6 est une coupe de la garniture de la figure 5, selon la ligne VI-VI de cette figure,
- la figure 7 est une vue extérieure de la garniture d'étanchéité visible sur la figure 4,
- la figure 8 est une coupe de la garniture de la figure 7, selon la ligne VIII-VIII de cette figure, et
- la figure 9 est une vue schématique d'une autre forme de réalisation d'un dispositif, du type bipasse, selon l'invention.

Le dispositif à vanne-papillon selon l'invention comporte un boîtier 1 constitué de deux éléments de boîtier 1A, 1B assemblés par exemple par encliquetage, dans lequel s'étend au moins un canal 10 d'écoulement de fluide débouchant à l'extérieur du boîtier par des accès 100, 101 adaptés pour être raccordés à des conduits destinés à être mis en communication ou isolés par le dispositif.

Dans le canal 10, est disposé un papillon 2 fixé à une broche 3 mobile en pivotement autour de son axe longitudinal, de telle manière que le papillon soit lui-même mobile en pivotement d'une position de pleine ouverture dans laquelle il s'étend longitudinalement dans le canal à une position de fermeture dans laquelle il s'étend transversalement dans celui-ci, et inversement, afin de mettre en communication ou isoler l'un de l'autre les conduits raccordés aux accès 100, 101. La broche 3 s'étend, de part et d'autre du papillon, dans des logements prévus dans les deux éléments de boîtier 1A, 1B, où elle est portée par des bagues, comme on le verra dans la suite.

Les deux éléments de boîtier sont disposés en vis-à-vis le long de deux surfaces de joints respectives, et accolés par au moins un plan de joint 11 traversant transversalement le canal 10 et passant par l'axe longitudinal de pivotement de la broche 3. C'est également le long de cette surface de joint que s'étend le papillon lorsqu'il est en position de fermeture.

Les surfaces de joint comportent sur tout le pourtour du canal 10, une cavité 12 débouchant dans celui-ci et l'élargissant tout le long de ce pourtour; chacune des deux cavités 12 sert de logement à une garniture d'étanchéité 4A, 4B légèrement en saillie par rapport au plan de joint 11 lorsque les éléments de boîtier ne sont pas accolés, de telle sorte que les garnitures 4A, 4B en vis-à-vis autour du canal 10 lorsque les éléments 1A, 1B sont accolés, soient alors elles-mêmes accolées par le plan de joint et en compression pour constituer un anneau d'étanchéité autour du canal.

La profondeur des cavités 12 et l'épaisseur des garnitures 4A, 4B sont supérieures au rayon de la broche 3, de telle sorte que l'épaisseur de l'anneau d'étanchéité soit supérieure au diamètre de la broche.

Le canal 10 étant ici de forme circulaire, il en est de même de l'anneau entourant celui-ci.

Cet anneau est percé dans des régions opposées, de deux trous respectifs alignés, s'étendant donc ici radialement, dans lesquels deux régions de la broche 3 disposées de part et d'autre du papillon 2 sont montées pivotantes en contact étanche sur tout leur pourtour.

Ces deux trous circulaires sont constitués chacun par deux cavités semi-circulaires 40 ménagées dans les garnitures 4A, 4B, creusées en vis-à-vis dans la surface de joint de celles-ci.

Chacune des garnitures 4A, 4B présente, s'étendant entre ces deux cavités 40 et ainsi entre les deux trous de l'anneau, d'un côté du canal 10, un premier tronçon de paroi interne 41 dimensionné pour permettre par ce côté un libre pivotement du papillon 2 et ainsi un libre accès au plan de joint 11, c'est-à-dire, dans le cas d'un papillon circulaire, un tronçon dont le rayon intérieur est supérieur à celui du papillon ; encore entre les deux cavités 40, mais de l'autre côté du canal, s'étend un deuxième tronçon de paroi interne 42 dimensionné pour interdire par ce côté l'accès au plan de joint 11 et ainsi à la position de fermeture, c'est-à-dire, dans le cas d'un papillon circulaire, un tronçon dont le rayon intérieur est inférieur à celui du papillon.

Les deux garnitures 4A, 4B sont accolées de telle sorte que le premier tronçon de paroi interne 41 de chaque garniture soit adjacent au deuxième tronçon 42 de l'autre. Ainsi, chaque deuxième tronçon 42 est plus en saillie dans le canal que le premier tronçon qui lui est adjacent, et est définie une face 43 s'étendant transversalement au pourtour du canal, d'un trou à l'autre de l'anneau d'étanchéité, formant siège pour le papillon. Les deux faces 43 respectives des deux garnitures sont ainsi orientées dans des directions opposées.

De préférence, le deuxième tronçon 42 de chaque garniture est plus en saillie que le premier tronçon 41 sur seulement une partie de sa longueur, ce deuxième tronçon présentant du côté du plan de joint 11, un évidement dont la profondeur est approximativement égale à la moitié de l'épaisseur du papillon 2 ; ainsi, la face 43 est en retrait dans chaque garniture, et, en position de fermeture, le papillon 2 s'étend dans une direction appartenant au plan de joint 11, perpendiculaire à la direction de l'écoulement du fluide dans le canal 10.

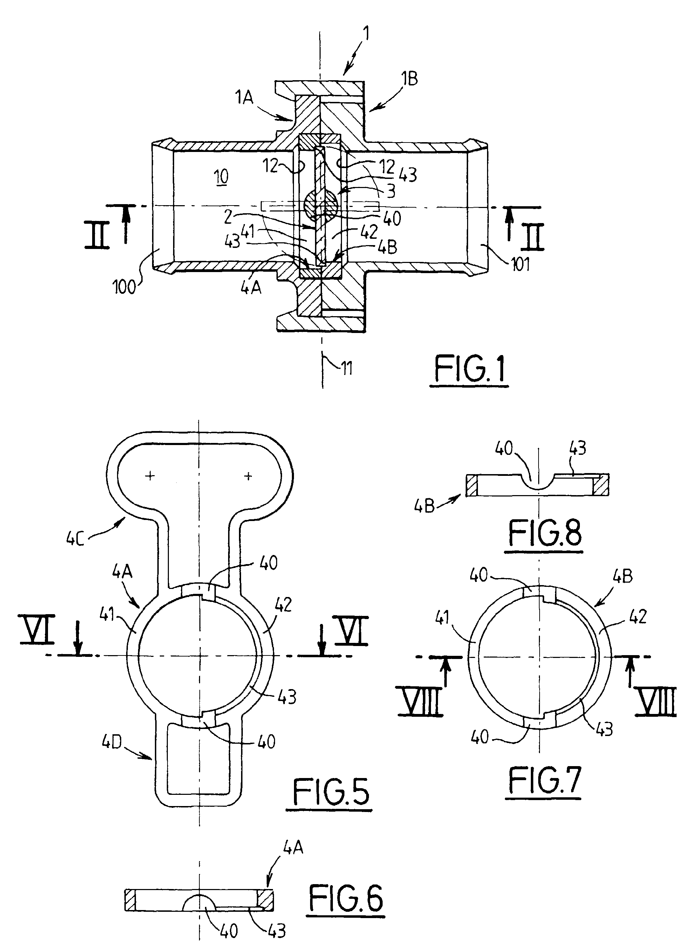

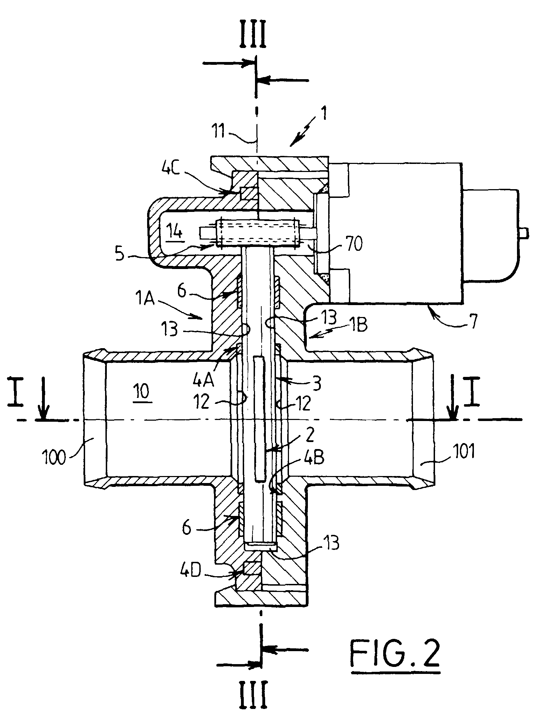

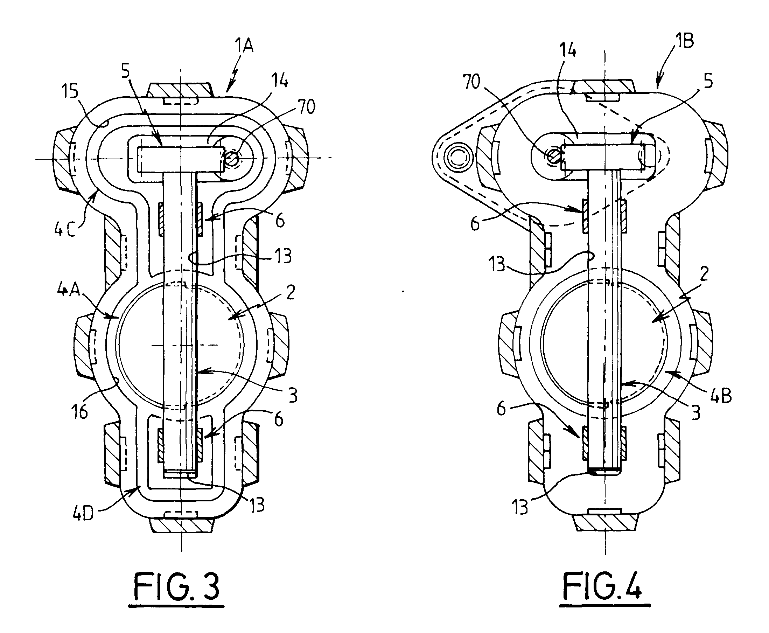

Le dispositif selon l'invention représenté sur les figures 2 à 4 et dont la figure 1 est une coupe selon la ligne I-I de la figure 2, est motorisé au moyen d'un moteur par exemple pas-à-pas.

Plus précisément, en vue d'actionner le papillon 2, la broche 3, qui est ajustée dans des logements semi-cylindriques respectifs 13 creusés dans les surfaces de joint des deux éléments de boîtier 1A, 1B et est portée par des bagues 6 logées dans des alvéoles de ces logements qui sont en regard dans les deux éléments 1A, 1B, se prolonge d'un côté dans le boîtier 1, en saillie à l'intérieur d'une chambre 14 débouchant à l'extérieur du boîtier et ici plus précisément de l'élément de boîtier 1B, et à la région en saillie de la broche 3 est fixé un pignon 5 logé dans la chambre 14 et dont l'axe central est aligné avec l'axe longitudinal de la broche. Un moteur 7, tel qu'un moteur pas-à-pas est fixé à l'extérieur de l'élément de boîtier 1 B de telle sorte que son arbre de sortie 70 pénètre dans la chambre 14 en s'y étendant orthogonalement à l'axe de pivotement de la broche 3 et du pignon 5 ; cet arbre de sortie 70 est réalisé sous la forme d'une vis sans fin dont les filets sont, dans la chambre 14, en relation d'engrènement avec les dents du pignon 5, afin que la rotation de l'arbre 70 du moteur entraîne celle du pignon 5, de la broche 3, et du papillon 2.

En variante au dispositif représenté sur les figures 2 à 4, l'extrémité libre de l'arbre 70 du moteur peut être logée dans le boîtier et plus particulièrement dans l'élément 1A et supportée dans cet élément par un coussinet, ce qui évite que l'arbre s'étende en porte-à-faux dans la chambre 14.

Une parfaite étanchéité de l'ensemble du dispositif est assurée par le fait que l'une des deux garnitures, ici la garniture 4A, porte des ramifications suivant le contour de l'élément de boîtier dans lequel elle est logée, à quelques millimètres du pourtour extérieur de sa surface de joint.

En effet, dans la surface de joint de l'élément de boîtier 1A, sont creusées deux rainures 15, 16 s'y étendant en forme de boucle, en suivant le pourtour extérieur de cette surface à quelques millimètres de lui, respectivement de part et d'autre du canal 10 ; ces deux rainures ont la même profondeur que la cavité 12 pour la garniture 4A ; une première rainure 15 entoure à distance, symétriquement, le logement 13 et de préférence l'ensemble formé par la chambre 14 et le logement 13 dans lequel est ajustée la partie de la broche 3 qui s'étend entre la garniture 4A et la chambre 14, et comporte respectivement de part et d'autre de ce logement et éventuellement de la chambre, deux branches dont les extrémités débouchent dans la cavité 12 pour la garniture 4A ; l'autre rainure 16 entoure à distance symétriquement le logement 13 dans lequel est ajustée la partie de la broche 3 qui s'étend à l'opposé de la chambre 14, et comporte respectivement de part et d'autre du logement, également deux branches dont les extrémités débouchent dans la cavité 12 pour la garniture 4A.

Ces deux rainures 15, 16 servent de logement respectivement à deux boucles d'étanchéité d'extrémités 4C, 4D d'un seul tenant avec la garniture d'étanchéité 4A à laquelle elles se raccordent toutes deux de part et d'autre des cavités 40 pour la broche 3, respectivement. Ainsi, une première boucle 4C entoure à distance symétriquement par exemple l'ensemble formé par la chambre 14 et le logement 13 pour la broche 3, en suivant le pourtour extérieur de la surface de joint à quelques millimètres de lui, d'un côté du canal 10, et la deuxième boucle 4D entoure à distance symétriquement le logement 13 pour la broche 3, en suivant également le pourtour extérieur de la surface de joint à quelques millimètres de lui, de l'autre côté du canal 10. L'épaisseur des boucles 4C, 4D est égale à celle de la garniture 4A afin qu'elles soient également en compression lorsque les éléments 1A, 1B sont accolés.

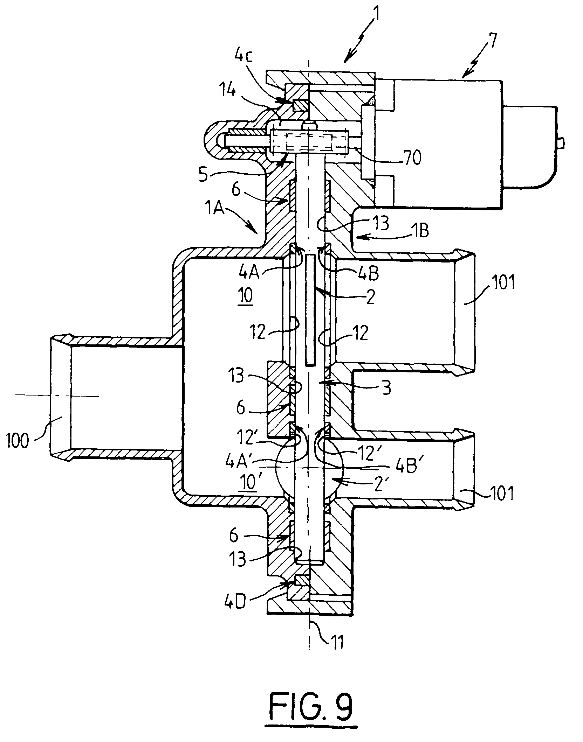

Le dispositif de vanne quart de tour avec bipasse de la figure 9 étant similaire au dispositif des figures 1 à 4, la description détaillée de ses points de similarité avec celui de ces figures précédentes ne sera pas répétée, et les éléments communs sont repérés par les mêmes références numériques.

Il s'agit cette fois d'un dispositif à trois voies, et ainsi deux canaux 10, 10' d'écoulement de fluide s'étendent dans le boîtier 1, lesquels débouchent à l'extérieur du boîtier par des accès 100, 101, 101', un accès 100 étant commun aux deux canaux, qui débouchent l'un dans l'autre du côté de cet accès. Les axes longitudinaux des deux canaux sont parallèles.

Dans le canal 10', est disposé un papillon 2' fixé à la même broche pivotante 3 que le papillon 2, de la même manière, mais s'étendant dans un plan perpendiculaire à celui du papillon 2 ; ainsi, le papillon 2' est en position de pleine ouverture quand le papillon 2 est en position de fermeture, et inversement; ici, le deuxième canal 10', plus éloigné du moteur 7 que le premier canal 10, présente une plus petite section que ce premier canal.

Les surfaces de joint des éléments de boîtier 1A, 1B comportent sur tout le pourtour du canal 10' une cavité 12' débouchant dans celui-ci et l'élargissant tout le long de ce pourtour ; chacune des deux cavités 12' sert de logement à une garniture d'étanchéité 4A', 4B' légèrement en saillie par rapport au plan de joint 11 lorsque les éléments de boîtier ne sont pas accolés de telle sorte que les garnitures soient en compression pour constituer un anneau d'étanchéité autour du canal 10' lorsqu'elles sont accolées.

La profondeur des cavités 12' et l'épaisseur des garnitures 4A' et 4B' sont les mêmes que celles des cavités et des garnitures correspondant au premier canal 10.

Le canal 10' est ici également circulaire.

L'anneau d'étanchéité entourant le canal 10' est également percé de trous alignés, constitués par des cavités semi-circulaires ménagées dans les garnitures 4A', 4B', dans lesquels la broche 3 est montée pivotante en contact étanche ; ainsi, la broche portant les deux papillons 2, 2' s'étend dans le boîtier entre ces deux papillons et de part et d'autre de ceux-ci dans des logements 13 prévus pour elle dans les deux éléments de boîtier 1A, 1B où elle est portée par des bagues 6 de la même manière que précédemment ; cependant, la broche étant plus longue, il est prévu trois bagues 6, respectivement de part et d'autre des deux canaux et entre ceux-ci.

L'agencement des garnitures 4A', 4B' est identique à celui des garnitures 4A, 4B du canal 10, la différence essentielle consistant en ce que, les plans dans lesquels s'étendent les papillons étant perpendiculaires, l'un est en position d'ouverture totale quand l'autre est en position de fermeture.

Le dispositif est motorisé de la même manière que le précédent, mais bien que cela ne soit pas obligatoire, pour éviter que l'arbre 70 du moteur 7 soit en porte-à-faux, son extrémité libre est guidée dans l'élément de boîtier 1A, comme cela a été déjà évoqué.

Là encore, une parfaite étanchéité est assurée par le fait que l'une des deux garnitures, ici la garniture 4A, porte des ramifications suivant le contour de l'élément de boîtier dans lequel elle est logée, à quelques millimètres du pourtour extérieur de sa surface de joint, ces ramifications étant elles-mêmes logées dans un ensemble de rainures s'étendant entre les cavités 12 entourant les canaux et en boucles de part et d'autre de ceux-ci à distance autour des logements 13.

Ainsi, la pièce d'étanchéité est formée, d'un seul tenant, des deux garnitures d'étanchéité 4A et 4A', des deux boucles 4C, 4D, et de deux branches de liaison des garnitures d'étanchéité.

Plus précisément, comme il existe deux garnitures d'étanchéité, les deux boucles d'extrémités ne sont plus disposées de part et d'autre d'une unique garniture 4A, mais celle située côté moteur se raccorde à la garniture la plus proche, qui est la garniture 4A du premier canal 10, et celle située côté extrémité libre de la broche 3 se raccorde à la garniture la plus proche, qui est la garniture 4A' du deuxième canal 10' ; les deux garnitures 4A, 4A' sont reliées par deux branches de liaison (non visibles sur la figure 9) s'étendant respectivement de part et d'autre de la broche 3, entre ces deux garnitures.

Bien entendu, l'invention n'est pas limitée aux formes de réalisation ci-dessus décrites et représentées, et on pourra en prévoir d'autres sans sortir de son cadre, et notamment des formes de réalisation comportant plus de deux vannes-papillon, et également des formes de réalisation à vannes-papillon dont un ou plusieurs papillons ne sont pas étanchéifiés conformément à l'invention. Egalement, le moteur électrique par exemple pas-à-pas peut être remplacé par un autre moyen moteur, notamment par un élément thermostatique à dilatation de cire, chauffé ou refroidi, auquel est associée, logée dans la chambre 14, une tige mobile par exemple à crémaillère en relation d'engrènement avec un pignon de liaison porté dans la chambre de la même manière que précédemment par la broche du papillon ou des papillons, afin que les déplacements rectilignes de l'organe mobile de l'élément thermostatique entraînant un mouvement, tel qu'une translation, de la tige mobile, provoquent une rotation pouvant atteindre un quart de tour, de la broche.

## Revendications

1. Dispositif de mise en communication et d'isolement de conduits de fluide comportant un boîtier (1) dans lequel s'étend au moins un canal (10) pour le fluide débouchant du boîtier par des accès adaptés pour être raccordés aux conduits et contenant au moins un papillon (2) fixé à une broche (3) mobile en pivotement autour de son axe longitudinal, caractérisé en ce que le boîtier comporte deux éléments de boîtier (1A, 1B) présentant deux surfaces de joint respectives accolées par au moins un plan de joint traversant transversalement le canal et passant par l'axe de la broche, et les surfaces de joint comportent chacune une cavité (12) élargissant le canal sur tout son pourtour et dans laquelle est logée une garniture d'étanchéité (4A, 4B), les deux garnitures étant en vis-à-vis autour du canal et accolées par le plan de joint pour constituer un anneau d'étanchéité, lequel est percé de deux trous (40) alignés où deux régions de la broche disposées de part et d'autre du papillon sont montées pivotantes en contact étanche sur tout leur pourtour, et chaque garniture présente un premier tronçon de paroi interne (41) s'étendant entre les trous d'un côté du canal, dimensionné pour permettre par ce côté un pivotement du papillon d'une position de pleine ouverture où il s'étend approximativement longitudinalement dans le canal à une position approximativement transversale de fermeture, et un deuxième tronçon de paroi interne (42) s'étendant entre les trous de l'autre côté du canal et dimensionné pour interdire par ce côté l'accès à la position de fermeture, le premier tronçon de paroi interne de chaque garniture étant adjacent au deuxième tronçon de l'autre, chaque deuxième tronçon étant sur au moins une partie de la longueur de la garniture plus en saillie dans le canal que le premier tronçon qui lui est adjacent, pour définir une face (43) s'étendant transversalement au pourtour du canal, d'un trou à l'autre de l'anneau d'étanchéité, formant siège pour le papillon, les faces formant sièges des deux garnitures étant orientées dans des directions opposées.

2. Dispositif selon la revendication 1, caractérisé en ce que la broche (3) s'étend, de part et d'autre du papillon, dans des logements (13) prévus pour elle dans les deux éléments de boîtier (1A, 1B), et la surface de joint d'au moins l'un des deux éléments est creusée de rainures (15, 16) s'y étendant, respectivement de part et d'autre du canal (10), en forme de boucles entourant à distance les logements (13) et débouchant dans la cavité (12) pour la garniture d'étanchéité (4A) de cet élément (1A), et dans ces rainures (15, 16), sont logées des boucles d'étanchéité (4C, 4D) d'un seul tenant avec la garniture d'étanchéité (4A).

3. Dispositif selon l'une quelconque des revendications 1 et 2, caractérisé en ce qu'il comporte au moins deux canaux (10, 10') s'étendant dans le boîtier (1), dans chacun desquels est disposé un papillon (2, 2').

4. Dispositif selon la revendication 3, caractérisé en ce que les canaux (10, 10') débouchent à l'extérieur du boîtier par des accès (100, 101, 101') dont l'un est commun à ces canaux, qui débouchent l'un dans l'autre du côté de cet accès (100).

5. Dispositif selon l'une quelconque des revendications 3 et 4, caractérisé en ce que les papillons (2, 2') sont fixés à la même broche (3), et ces papillons s'étendent dans des plans perpendiculaires afin que l'un soit en position de pleine ouverture quand l'autre est en position de fermeture.

6. Dispositif selon l'une quelconque des revendications 3 à 5, caractérisé en ce que, autour de chaque canal (10, 10'), les surfaces de joint des deux éléments de boîtier (1A, 1B) comportent chacune une cavité (12, 12') élargissant le canal sur tout son pourtour et dans laquelle est logée une garniture d'étanchéité (4A, 4B, 4A', 4B'), les deux garnitures autour de chaque canal étant accolées par le plan de joint pour constituer un anneau d'étanchéité percé de trous alignés où deux régions de la broche sont montées pivotantes en contact étanche sur tout leur pourtour, les deux garnitures comportant chacune une face (43) formant siège pour le papillon, les faces formant sièges des deux garnitures étant orientées dans des directions opposées.

7. Dispositif selon l'une quelconque des revendications 3 à 5, caractérisé en ce que la même broche (3) porte les deux papillons et s'étend dans le boîtier de part et d'autre des deux papillons et entre ceux-ci dans des logements (13) où elle est portée par des bagues (6), et la surface de joint d'au moins l'un des deux éléments de boîtier (1A, 1B) est creusée de rainures s'étendant entre les cavités (12) entourant les canaux (10, 10') et en boucles respectivement de part et d'autre des canaux à distance autour des logements (13), et dans ces rainures, sont logées des branches de liaison des garnitures d'étanchéité (4A, 4A') et des boucles d'étanchéité (4C, 4D) d'un seul tenant avec les garnitures.

8. Dispositif selon l'une quelconque des revendications 1 à 7, caractérisé en ce qu'il comporte un moteur (7) fixé à l'extérieur d'un élément de boîtier (1B), la broche (3) se prolonge d'un côté d'un canal (10), en saillie à l'intérieur d'une chambre (14) du boîtier dans laquelle pénètre également un arbre de sortie (70) du moteur, et l'arbre de sortie (70) est relié à la broche (3) par des moyens de liaison afin que la rotation de l'arbre entraîne celle de la broche.

9. Dispositif selon l'une quelconque des revendications 1 à 7, caractérisé en ce qu'il comporte un moyen moteur constitué par un élément thermostatique à dilatation de cire, et la broche (3) se prolonge d'un côté d'un canal (10), en saillie à l'intérieur d'une chambre (14) du boîtier dans laquelle pénètre également une tige mobile associée à l'élément thermostatique, et la tige mobile est reliée à la broche (3) par des moyens de liaison afin qu'une translation de la tige mobile entraîne la rotation de la broche.

10. Dispositif selon la revendication 2 et l'une quelconque des revendications 8 et 9, caractérisé en ce que l'une des rainures (15, 16) entoure à distance un ensemble formé par la chambre (14) et un logement (13) pour la broche, et dans cette rainure (15), est logée une boucle d'étanchéité (4C) d'un seul tenant avec une garniture d'étanchéité (4A).
